# EUROPEAN PATENT APPLICATION

(11) **EP 3 633 838 A1**
(43) Date of publication of application: **08.04.2020**
(21) Application number: 17916235.9
(22) Date of filing: 18.08.2017
(51) Int. Cl.: H02M 3/335

(54) **BUCK-BOOST CHIP CONTROL METHOD, BUCK-BOOST CHIP, AND ELECTRONIC DEVICE**

(30) Priority: 27.06.2017 CN 201710502572
(71) Applicant: Huawei Technologies Co., Ltd., Longgang District Shenzhen, Guangdong 518129 (CN)
(72) Inventor: ZHU, Li, Shenzhen Guangdong 518129 (CN)
(74) Representative: Epping - Hermann - Fischer
(86) International application number: PCT/CN2017/098136
(87) International publication number: WO 2019/000611

(57) **Abstract**

This application provides a buck/boost chip control method, a buck/boost chip, and an electronic device. The buck/boost chip includes a power drive circuit, a buck control logic module, a boost control logic module, and a feedback circuit. The power drive circuit is separately connected to the buck control logic module, the boost control logic module, and the feedback circuit. The feedback circuit is separately connected to the buck control logic module and the boost control logic module. The feedback circuit is configured to: after operating mode configuration information is received, set an operating mode of the buck/boost chip to an operating mode corresponding to the operating mode configuration information by adjusting a connection relationship of a feedback pin of the feedback circuit based on the operating mode configuration information. The buck/boost chip control method, the buck/boost chip, and the electronic device provided in this application simplify a structure of the buck/boost chip.

## Description

This application claims priority to Chinese Patent Application No. 201710502572.3, filed with the Chinese Patent Office on June 27, 2017 and entitled "BUCK/BOOST CONTROL CIRCUIT", which is incorporated herein by reference in its entirety.

### TECHNICAL FIELD

Embodiments of this application relate to the circuit field, and in particular, to a buck/boost chip control method, a buck/boost chip, and an electronic device.

### BACKGROUND

A buck/boost circuit is one of commonly used circuits in an electronic device. When a voltage of an external power supply changes, the buck/boost circuit can increase or reduce the voltage of the external power supply to a rated use voltage of the electronic device, so that the electronic device can work stably.

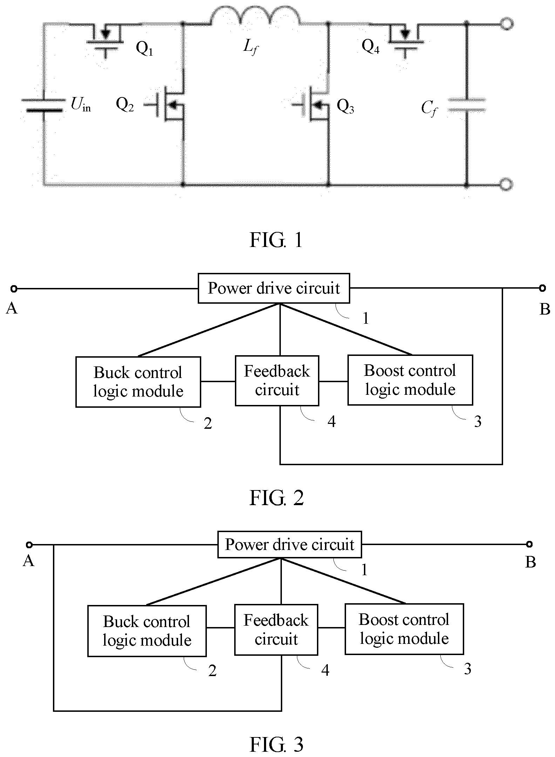

In the prior art, buck/boost is implemented by using a buck/boost circuit. FIG 1 is a schematic structural diagram of a buck/boost circuit in the prior art. As shown in FIG 1, a voltage input end is on a left side of the buck/boost circuit, a voltage output end is on a right side, and the buck/boost circuit includes four field effect transistors in total: Q1, Q2, Q3, and Q4. In a buck process, Q3 is disconnected, Q4 is constantly connected, and buck control logic module controls Q1 and Q2 to be periodically connected and disconnected, so that an input voltage on the left side undergoes buck processing and is then output from the output end on the right side. In a boost process, Q1 is constantly connected, Q2 is disconnected, and boost control logic module controls Q3 and Q4 to be periodically connected and disconnected, so that an input voltage on the left side undergoes boost processing and is then output from the output end on the right side.

At least four field effect transistors need to be disposed when the existing buck/boost circuit is used. In this way, the boost control logic and the buck control logic each control two different field effect transistors to process the input voltage in the boost and buck processes. As a result, a structure of the buck/boost circuit is relatively complex.

### SUMMARY

This application provides a buck/boost chip control method, a buck/boost chip, and an electronic device, so as to simplify a structure of a buck/boost circuit.

This application provides a buck/boost chip, including:
a power drive circuit, a buck control logic module, a boost control logic module, and a feedback circuit, where the power drive circuit is separately connected to the buck control logic module, the boost control logic module, and the feedback circuit; and the feedback circuit is separately connected to the buck control logic module and the boost control logic module;
the feedback circuit is configured to: after operating mode configuration information is received, set an operating mode of the buck/boost chip to an operating mode corresponding to the operating mode configuration information by adjusting a connection relationship of a feedback pin of the feedback circuit based on the operating mode configuration information, where the operating mode of the buck/boost chip includes a first operating mode and a second operating mode;
in the first operating mode, a first end of the feedback circuit is connected to a first end of the power drive circuit, the first end of the power drive circuit is a first feedback point of the feedback circuit, and the buck control logic module is configured to control the power drive circuit to: reduce an input voltage of a second end of the power drive circuit to a first preset voltage and then output the first preset voltage from the first end of the power drive circuit;
in the second operating mode, the first end of the feedback circuit is connected to the second end of the power drive circuit, the second end of the power drive circuit is a second feedback point of the feedback circuit, and the boost control logic module is configured to control the power drive circuit to: increase an input voltage of the first end of the power drive circuit to a second preset voltage and then output the second preset voltage from the second end of the power drive circuit; and
the feedback circuit is configured to: in the first operating mode, feedback the output voltage of the first end of the power drive circuit to the buck control logic module; and in the second operating mode, feedback the output voltage of the second end of the power drive circuit to the boost control logic module.

In an embodiment of this application, the buck/boost chip further includes a detection circuit, where
in the first operating mode, the detection circuit is connected to the feedback circuit and the first feedback point, and in the second operating mode, the detection circuit is connected to the feedback circuit and the second feedback point; and
the detection circuit is configured to detect, based on the operating mode of the buck/boost chip, whether an output voltage of the buck/boost chip meets a preset working condition, where the preset working condition includes the following: in the first operating mode, the output voltage of the first end of the power drive circuit is less than the input voltage of the second end of the power drive circuit, and in the second operating mode, the output voltage of the second end of the power drive circuit is greater than the input voltage of the first end of the power drive circuit.

In an embodiment of this application, the power drive circuit includes a first capacitor, a second capacitor, a first field effect transistor, a second field effect transistor, and an inductor, where: a second end of the buck/boost chip is connected to the first capacitor in parallel; a first end of the first capacitor is connected to a first end of the first field effect transistor; a second end of the first capacitor is connected to a first end of the second field effect transistor and a second end of the second capacitor; a third terminal of the first field effect transistor is connected to a third terminal of the second field effect transistor and a first end of the inductor; a second end of the first field effect transistor is connected to a first end of the buck control logic module, a first end of the boost control logic module, and a second end of the feedback circuit; a second end of the second field effect transistor is connected to a second end of the buck control logic module, a second end of the boost control logic module, and a third terminal of the feedback circuit; the detection circuit is connected to the first end of the feedback circuit; a second end of the inductor is connected to a first end of the second capacitor; and the second capacitor is connected to the second end of the buck/boost chip in parallel.

In an embodiment of this application, in the first operating mode, the first end of the feedback circuit is connected to the second end of the inductor and the first end of the second capacitor; and
in the second operating mode, the first end of the feedback circuit is connected to the first end of the first capacitor and the first end of the first field effect transistor.

This application provides an electronic device. The electronic device includes the buck/boost chip according to any one of the foregoing embodiments.

This application provides a buck/boost chip control method, including:
obtaining operating mode configuration information, where the operating mode configuration information is used to instruct a feedback circuit to adjust an operating mode of a buck/boost chip, and the buck/boost chip includes a boost control logic module, a buck control logic module, the feedback circuit, and a power drive circuit; and
setting the operating mode of the buck/boost chip to an operating mode corresponding to the operating mode configuration information by adjusting a connection relationship of a feedback pin of the feedback circuit based on the operating mode configuration information, where the operating mode of the buck/boost chip includes a first operating mode and a second operating mode; in the first operating mode, a first end of the feedback circuit is connected to a first end of the power drive circuit, the first end of the power drive circuit is a first feedback point of the feedback circuit, the buck control logic module is configured to control the power drive circuit to: reduce an input voltage of a second end of the power drive circuit to a first preset voltage and then output the first preset voltage from the first end of the power drive circuit, and the feedback circuit is configured to feedback the output voltage of the first end of the power drive circuit to the buck control logic module; and in the second operating mode, the first end of the feedback circuit is connected to the second end of the power drive circuit, the second end of the power drive circuit is a second feedback point of the feedback circuit, the boost control logic module is configured to control the power drive circuit to: increase an input voltage of the first end of the power drive circuit to a second preset voltage and then output the second preset voltage from the second end of the power drive circuit, and the feedback circuit is configured to feedback the output voltage of the second end of the power drive circuit to the boost control logic module.

In an embodiment of this application, after the setting the operating mode of the buck/boost chip to an operating mode corresponding to the operating mode configuration information by adjusting a connection relationship of a feedback pin of the feedback circuit based on the operating mode configuration information, the method further includes:
detecting, based on the operating mode of the buck/boost chip, whether an output voltage of the buck/boost chip meets a preset working condition, where the preset working condition includes the following: in the first operating mode, the output voltage of the first end of the power drive circuit is less than the input voltage of the second end of the power drive circuit, and in the second operating mode, the output voltage of the second end of the power drive circuit is greater than the input voltage of the first end of the power drive circuit.

In an embodiment of this application, the power drive circuit includes a first capacitor, a second capacitor, a first field effect transistor, a second field effect transistor, and an inductor, where: a second end of the buck/boost chip is connected to the first capacitor in parallel; a first end of the first capacitor is connected to a first end of the first field effect transistor; a second end of the first capacitor is connected to a first end of the second field effect transistor and a second end of the second capacitor; a third terminal of the first field effect transistor is connected to a third terminal of the second field effect transistor and a first end of the inductor; a second end of the first field effect transistor is connected to a first end of the buck control logic module, a first end of the boost control logic module, and a second end of the feedback circuit; a second end of the second field effect transistor is connected to a second end of the buck control logic module, a second end of the boost control logic module, and a third terminal of the feedback circuit; the detection circuit is connected to the first end of the feedback circuit; a second end of the inductor is connected to a first end of the second capacitor; and the second capacitor is connected to the second end of the buck/boost chip in parallel.

In an embodiment of this application, in the first operating mode, the first end of the feedback circuit is connected to the second end of the inductor and the first end of the second capacitor; and
in the second operating mode, the first end of the feedback circuit is connected to the first end of the first capacitor and the first end of the first field effect transistor.

In an embodiment of this application, after the setting the operating mode of the buck/boost chip to an operating mode corresponding to the operating mode configuration information by adjusting a feedback pin of the feedback circuit based on the operating mode configuration information, the method further includes:
determining whether a real-time output voltage of the buck/boost chip is stable; and
feeding back, by the feedback circuit if the real-time output voltage is unstable, the real-time output voltage to an input terminal of the buck/boost chip, so that the buck/boost chip performs boost or buck processing on an input voltage of the buck/boost chip based on the real-time output voltage.

This application provides the buck/boost chip control method, the buck/boost chip, and the electronic device. The buck/boost chip includes the power drive circuit, the buck control logic module, the boost control logic module, and the feedback circuit. The power drive circuit is separately connected to the buck control logic module, the boost control logic module, and the feedback circuit; and the feedback circuit is separately connected to the buck control logic module and the boost control logic module. The feedback circuit is configured to: after operating mode configuration information is received, set the operating mode of the buck/boost chip to the operating mode corresponding to the operating mode configuration information by adjusting the connection relationship of the feedback pin of the feedback circuit based on the operating mode configuration information. The operating mode of the buck/boost chip includes the first operating mode and the second operating mode. In the first operating mode, the first end of the feedback circuit is connected to the first end of the power drive circuit, the first end of the power drive circuit is the first feedback point of the feedback circuit, and the buck control logic module is configured to control the power drive circuit to: reduce the input voltage of the second end of the power drive circuit to the first preset voltage and then output the first preset voltage from the first end of the power drive circuit. In the second operating mode, the first end of the feedback circuit is connected to the second end of the power drive circuit, the second end of the power drive circuit is the second feedback point of the feedback circuit, and the boost control logic module is configured to control the power drive circuit to: increase the input voltage of the first end of the power drive circuit to the second preset voltage and then output the second preset voltage from the second end of the power drive circuit. The feedback circuit is configured to: in the first operating mode, feedback the output voltage of the first end of the power drive circuit to the buck control logic module; and in the second operating mode, feedback the output voltage of the second end of the power drive circuit to the boost control logic module. The boost control logic module or the buck control logic module is used to connect a switching transistor in the power drive circuit to drive an external load, thereby meeting boost and buck requirements in different scenarios by configuring the buck/boost chip. In addition, the boost control logic module and the buck control logic module can share the power drive circuit. Therefore, the buck/boost chip may include only one power drive circuit, thereby simplifying a structure of the buck/boost chip, so that the buck/boost chip can be integrated into one chip. A range of adjustment of a circuit in application of an electronic device system is relatively small. Therefore, by using the buck/boost chip in the embodiments, boost and buck requirements can be met by using one chip, providing features of flexibility, practicability, and low costs.

### BRIEF DESCRIPTION OF DRAWINGS

FIG. 1 is a schematic structural diagram of a buck/boost circuit in the prior art;
FIG. 2 is a schematic structural diagram of a first embodiment of a buck/boost chip according to this application;
FIG. 3 is a schematic structural diagram of a second embodiment of a buck/boost chip according to this application;
FIG. 4 is a schematic structural diagram of a third embodiment of a buck/boost chip according to this application;
FIG. 5 is a schematic structural diagram of a fourth embodiment of a buck/boost chip according to this application;
FIG. 6 is a schematic structural diagram of a fifth embodiment of a buck/boost chip according to this application;
FIG. 7 is a schematic structural diagram of a sixth embodiment of a buck/boost chip according to this application;
FIG. 8 is a schematic flowchart of a first embodiment of a buck/boost chip control method according to this application;
FIG. 9 is a schematic flowchart of a second embodiment of a buck/boost chip control method according to this application; and
FIG. 10 is a schematic flowchart of a third embodiment of a buck/boost chip control method according to this application.

### DESCRIPTION OF EMBODIMENTS

FIG. 2 is a schematic structural diagram of a first embodiment of a buck/boost chip according to this application, and FIG. 3 is a schematic structural diagram of a second embodiment of a buck/boost chip according to this application. As shown in FIG. 2 and FIG. 3, the buck/boost chip in this example includes a power drive circuit 1, a buck control logic module 2, a boost control logic module 3, and a feedback circuit 4. The power drive circuit 1 is separately connected to the buck control logic module 2, the boost control logic module 3, and the feedback circuit 4. The feedback circuit 4 is separately connected to the buck control logic module 2 and the boost control logic module 3. The feedback circuit 4 is configured to: after operating mode configuration information is received, set an operating mode of the buck/boost chip to an operating mode corresponding to the operating mode configuration information by adjusting, based on the operating mode configuration information, a feedback pin that is of the feedback circuit 4 and that is used to receive an input signal. For example, in the embodiment of the buck/boost chip shown in FIG. 2, the feedback circuit connects the feedback pin that is used to receive an input signal to a terminal B of the buck/boost chip. In this case, the feedback circuit can receive a signal from the terminal B by using the feedback pin. In the embodiment of the buck/boost chip shown in FIG. 3, the feedback circuit connects the feedback pin that is used to receive an input signal to a terminal A of the buck/boost chip. In this case, the feedback circuit 4 can receive a signal from the terminal A by using the feedback pin. Optionally, the feedback pin that is of the feedback circuit 4 and that is used to receive an input signal may be connected to both the terminal A and the terminal B of the buck/boost chip; and the feedback circuit 4 selects, based on the operating mode configuration information, whether to receive the signal from the terminal A of the buck/boost chip or the signal from the terminal B of the buck/boost chip.

The operating mode of the buck/boost chip includes a first operating mode and a second operating mode. The feedback circuit 4 is configured to: in the first operating mode, feedback an output voltage of a second endA of the power drive circuit 1 to a first endB of the power drive circuit 1; and in the second operating mode, feedback an output voltage of the first endB of the power drive circuit 1 to the second endA of the power drive circuit 1. Optionally, the feedback circuit 4 receives the operating mode configuration information by using an I2C interface. The operating mode configuration information may be sent by a control center of the buck/boost chip, and the control center is connected to the feedback circuit 4 by using the I2C interface. Alternatively, the operating mode configuration information is sent by a user of the buck/boost chip by using an interactive device of the buck/boost chip.

In the first operating mode, a first end of the feedback circuit 4 is connected to the first endB of the power drive circuit 1, the first end of the power drive circuit 1 is a first feedback point of the feedback circuit 4, and the buck control logic module 2 is configured to control the power drive circuit 1 to: reduce an input voltage of the second endA of the power drive circuit 1 to a first preset voltage and then output the first preset voltage from the first endB of the power drive circuit 1. In the second operating mode, the first end of the feedback circuit 4 is connected to the second endA of the power drive circuit 1, the second endA of the power drive circuit 1 is a second feedback point of the feedback circuit, and the boost control logic module 3 is configured to control the power drive circuit 1 to: increase an input voltage of the first endB of the power drive circuit 1 to a second preset voltage and then output the second preset voltage from the second endA of the power drive circuit 1. The feedback circuit 4 is configured to: in the first operating mode, feedback the output voltage of the first endB of the power drive circuit 1 to the buck control logic module 2; and in the second operating mode, feedback the output voltage of the second endA of the power drive circuit 1 to the boost control logic module 3.

Specifically, in the buck/boost chips shown in FIG. 2 and FIG. 3, the buck/boost chip shown in FIG. 2 is in the first operating mode, and the buck/boost chip shown in FIG. 3 is in the second operating mode. It can be understood that the boost control logic module 3 and the buck control logic module 2 are connected in parallel. One of the boost control logic module 3 and the buck control logic module 2 is selected, by connecting the feedback circuit 4 to different feedback pins, for use. The boost control logic module 3 or the buck control logic module 2 is used to connect a switching transistor in the power drive circuit 1 to drive an external load, thereby meeting boost and buck requirements in different scenarios by configuring the buck/boost chip. In addition, the boost control logic module 3 and the buck control logic module 2 can share the power drive circuit 1. Therefore, the buck/boost chip may include only one power drive circuit 1, thereby simplifying a structure of the buck/boost chip, so that the buck/boost chip can be integrated into one chip. A range of adjustment of a circuit in application of an electronic device system is relatively small. Therefore, by using the buck/boost chip in this embodiment, boost and buck requirements can be met by using one chip, providing features of flexibility, practicability, and low costs.

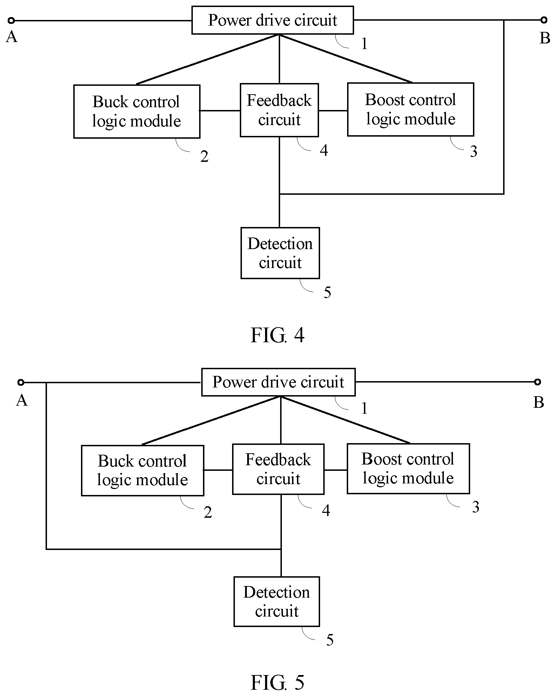

FIG. 4 is a schematic structural diagram of a third embodiment of a buck/boost chip according to this application, and FIG. 5 is a schematic structural diagram of a fourth embodiment of a buck/boost chip according to this application. On a basis of the embodiments shown in FIG. 2 and FIG. 3, the buck/boost chips shown in FIG. 4 and FIG. 5 further include a detection circuit 5. In a first operating mode shown in FIG. 4, the detection circuit 5 is connected to a feedback circuit 4 and a first feedback point; and in a second operating mode shown in FIG. 5, the detection circuit 5 is connected to the feedback circuit 4 and a second feedback point.

Specifically, the detection circuit is configured to detect, based on an operating mode of the buck/boost chip, whether an output voltage of the buck/boost chip meets a preset working condition, where the preset working condition includes the following: in the first operating mode, an output voltage of a first end of a power drive circuit is less than an input voltage of a second end of the power drive circuit, and in the second operating mode, an output voltage of the second end of the power drive circuit is greater than input voltage of the first end of the power drive circuit.

The buck/boost chip provided in this embodiment detects, by using the detection circuit, whether a current boost or buck configuration meets an operation scenario of a circuit. If a condition is not met, the buck/boost chip stops operating; or if the condition is met, the boost control logic module performs a boost operation again or the buck control logic module performs a buck operation again. The buck/boost chip provided in this embodiment can detect an operation condition during operation of the buck/boost chip. This ensures operation performance of the circuit, thereby improving performance of the buck/boost chip.

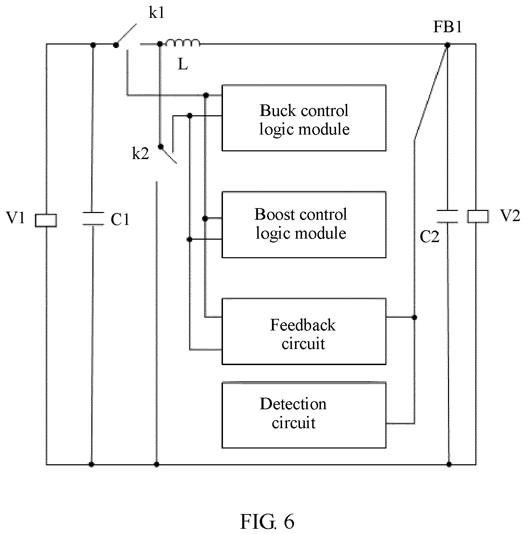

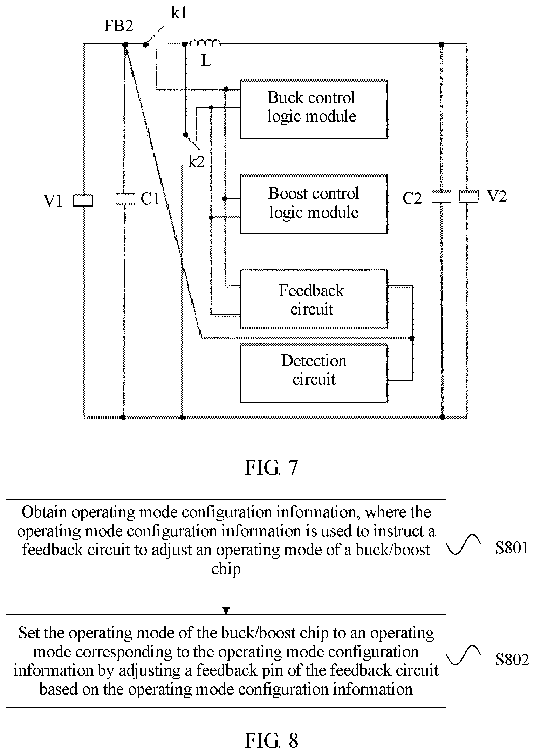

FIG. 6 is a schematic structural diagram of a fifth embodiment of a buck/boost chip according to this application, and FIG. 7 is a schematic structural diagram of a sixth embodiment of a buck/boost chip according to this application. On a basis of the embodiments shown in FIG. 1 and FIG. 2, in the buck/boost chips shown in FIG. 6 and FIG. 7, a power drive circuit 1 specifically includes a first capacitor C1, a second capacitor C2, a first field effect transistor K1, a second field effect transistor K2, and an inductor L. A second end of the buck/boost chip is connected to the first capacitor C1 in parallel; a first end of the first capacitor C1 is connected to a first end of the first field effect transistor K1; a second end of the first capacitor C1 is connected to a first end of the second field effect transistor K2 and a second end of the second capacitor C2; a third terminal of the first field effect transistor K1 is connected to a third terminal of the second field effect transistor K2 and a first end of the inductor L; a second end of the first field effect transistor K1 is connected to a first end of a buck control logic module, a first end of a boost control logic module, and a second end of a feedback circuit; a second end of the second field effect transistor K2 is connected to a second end of the buck control logic module, a second end of the boost control logic module, and a third terminal of the feedback circuit; a detection circuit is connected to a first end of the feedback circuit; a second end of the inductor L is connected to a first end of the second capacitor C2; and the second capacitor C2 is connected to the second end of the buck/boost chip in parallel. Optionally, the first end of the first field effect transistor K1 and the first end of the second field effect transistor K2 are drain electrodes, the second end of the first field effect transistor K1 and the second end of the second field effect transistor K2 are gate electrodes, and the third terminal of the first field effect transistor K1 and the third terminal of the second field effect transistor K2 are source electrodes.

Specifically, as shown in FIG. 6, when the buck/boost chip is in a first operating mode, buck control logic reduces, based on a control manner of a buck circuit, an input voltage V1 at a first end of the power drive circuit 1 to a first preset voltage V2 and outputs the first preset voltage V2 from a second end of the power drive circuit 1. An output relationship thereof is V2=V1^{∗}D, where D is an "on" time of the first field effect transistor 21 and the second field effect transistor 22. In the first operating mode, a first feedback point is located at FB1 in the figure, and the first feedback point is connected to the second end of the inductor 31 and the second end of the second capacitor C2. As shown in FIG. 4, when the buck/boost chip is in a second operating mode, boost control logic increases, based on a control manner of a boost circuit, an input voltage V2 at the second end of the power drive circuit 1 to a second preset voltage V1 and outputs the second preset voltage V1 from the first end of the power drive circuit 1. An output relationship thereof is V1=V2/(1-D), where D is an "on" time between the first field effect transistor 21 and the second field effect transistor 22. In the second operating mode, a second feedback point is located at FB2 in the figure, and the second feedback point is connected to the first end of the first capacitor 11 and the first end of the first field effect transistor 21.

This application provides an electronic device, including any buck/boost chip in the embodiments shown in FIG. 1 to FIG. 6. The electronic device may be any electronic device that needs to use the buck/boost chip, for example, a mobile phone, a computer, or a television set.

FIG. 8 is a schematic flowchart of a first embodiment of a buck/boost chip control method according to this application. As shown in FIG. 8, the buck/boost chip control method in this embodiment includes the following steps:
S801. Obtain operating mode configuration information, where the operating mode configuration information is used to instruct a feedback circuit to adjust an operating mode of a buck/boost chip, and the buck/boost chip includes a boost control logic module, a buck control logic module, the feedback circuit, and a power drive circuit.
S802. Set the operating mode of the buck/boost chip to an operating mode corresponding to the operating mode configuration information by adjusting a connection relationship of a feedback pin of the feedback circuit based on the operating mode configuration information. The operating mode of the buck/boost chip includes a first operating mode and a second operating mode. In the first operating mode, a first end of the feedback circuit is connected to a first end of the power drive circuit, the first end of the power drive circuit is a first feedback point of the feedback circuit, the buck control logic module is configured to control the power drive circuit to: reduce an input voltage of a second end of the power drive circuit to a first preset voltage and then output the first preset voltage from the first end of the power drive circuit, and the feedback circuit is configured to feedback the output voltage of the first end of the power drive circuit to the buck control logic module. In the second operating mode, the first end of the feedback circuit is connected to the second end of the power drive circuit, the second end of the power drive circuit is a second feedback point of the feedback circuit, the boost control logic module is configured to control the power drive circuit to: increase an input voltage of the first end of the power drive circuit to a second preset voltage and then output the second preset voltage from the second end of the power drive circuit, and the feedback circuit is configured to feedback the output voltage of the second end of the power drive circuit to the boost control logic module.

Specifically, it can be understood that the boost control logic module and the buck control logic module are connected in parallel. One of the boost control logic module and the buck control logic module is selected, by connecting the feedback circuit to different feedback pins, for use. The boost control logic module or the buck control logic module is used to connect a switching transistor in the power drive circuit to drive an external load, thereby meeting boost and buck requirements in different scenarios by configuring the buck/boost chip. In addition, the boost control logic module and the buck control logic module can share the power drive circuit. Therefore, the buck/boost chip may include only one power drive circuit, thereby simplifying a structure of the buck/boost chip, so that the buck/boost chip can be integrated into one chip. A range of adjustment of a circuit in application of an electronic device system is relatively small. Therefore, by using the buck/boost chip in this embodiment, boost and buck requirements can be met by using one chip, providing features of flexibility and practicability.

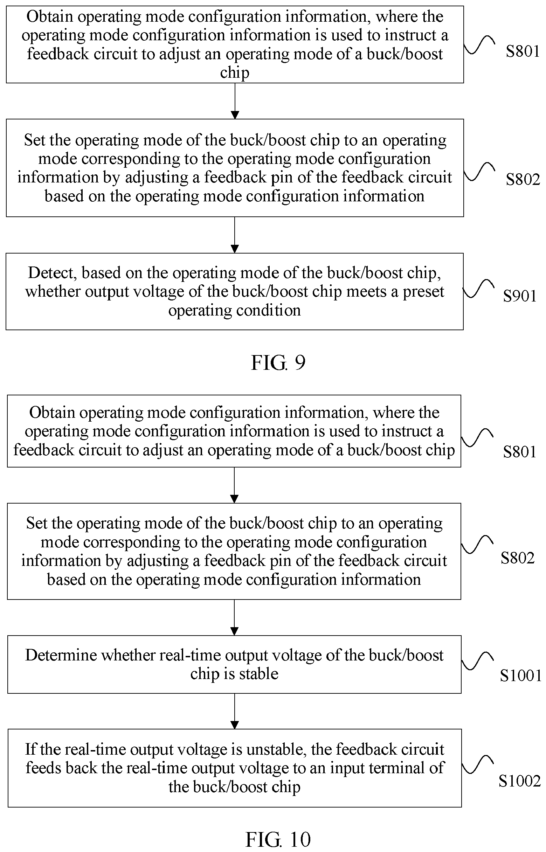

FIG. 9 is a schematic flowchart of a second embodiment of a buck/boost chip control method according to this application. As shown in FIG. 9, on a basis of the embodiment shown in FIG. 8, after S802, the method further includes the following step:
S901. Detect, based on the operating mode of the buck/boost chip, whether an output voltage of the buck/boost chip meets a preset working condition.

Specifically, a detection circuit included in the buck/boost chip is configured to detect, based on the operating mode of the buck/boost chip, whether the output voltage of the buck/boost chip meets the preset working condition. The preset working condition includes the following: in the first operating mode, the output voltage of the first end of the power drive circuit is less than the input voltage of the second end of the power drive circuit, and in the second operating mode, the output voltage of the second end of the power drive circuit is greater than the input voltage of the first end of the power drive circuit.

According to the buck/boost chip control method provided in this embodiment, whether a current boost or buck configuration meets an operation scenario of a circuit is detected. If a condition is not met, the buck/boost chip stops operating; or if the condition is met, the boost control logic module performs a boost operation again or the buck control logic module performs a buck operation again. According to the buck/boost chip control method provided in this embodiment, an operation condition can be detected during operation of the buck/boost chip. This ensures working performance of the circuit, thereby improving efficiency of the buck/boost chip control method.

FIG. 10 is a schematic flowchart of a third embodiment of a buck/boost chip control method according to this application. As shown in FIG. 10, on a basis of the embodiment shown in FIG. 8, after S802, the method further includes the following steps:
S1001. Determine whether a real-time output voltage of the buck/boost chip is stable, where whether the output voltage is stable is determined by using a voltage range of the output voltage.
S1002. If the real-time output voltage is unstable, the feedback circuit feeds back the real-time output voltage to an input terminal of the buck/boost chip, so that boost control logic or buck control logic in the buck/boost chip adjusts a control parameter of the boost control logic or the buck control logic, to stabilize the voltage range of the output voltage of the buck/boost chip; or if the real-time output voltage is stable, the output voltage is adjusted in real time according to a load of the buck/boost chip.

According to the buck/boost chip control method provided in this embodiment, whether the real-time output voltage of the buck/boost chip is stable is determined. If the real-time output voltage is unstable, a feedback is provided to the input terminal of the buck/boost chip, so that a buck/boost parameter is adjusted, to stabilize the output voltage; or if the real-time output voltage is stable, no adjustment is performed, and an operation of the boost control logic or the buck control logic in the buck/boost chip is finished. In this way, the output voltage of the buck/boost chip is adjusted in real time as a load changes. According to the buck/boost chip control method provided in this embodiment, an operation condition can be detected during operation of the buck/boost chip. This ensures working performance of a circuit, thereby improving efficiency of the buck/boost chip control method.

## Claims

1. A buck/boost chip, comprising:
a power drive circuit, a buck control logic module, a boost control logic module, and a feedback circuit, wherein the power drive circuit is separately connected to the buck control logic module, the boost control logic module, and the feedback circuit; and the feedback circuit is separately connected to the buck control logic module and the boost control logic module;
the feedback circuit is configured to: after operating mode configuration information is received, set an operating mode of the buck/boost chip to an operating mode corresponding to the operating mode configuration information by adjusting a connection relationship of a feedback pin of the feedback circuit based on the operating mode configuration information, wherein the operating mode of the buck/boost chip comprises a first operating mode and a second operating mode;
in the first operating mode, a first end of the feedback circuit is connected to a first end of the power drive circuit, the first end of the power drive circuit is a first feedback point of the feedback circuit, and the buck control logic module is configured to control the power drive circuit to: reduce an input voltage of a second end of the power drive circuit to a first preset voltage and then output the first preset voltage from the first end of the power drive circuit;
in the second operating mode, the first end of the feedback circuit is connected to the second end of the power drive circuit, the second end of the power drive circuit is a second feedback point of the feedback circuit, and the boost control logic module is configured to control the power drive circuit to: increase an input voltage of the first end of the power drive circuit to a second preset voltage and then output the second preset voltage from the second end of the power drive circuit; and
the feedback circuit is configured to: in the first operating mode, feedback an output voltage of the first end of the power drive circuit to the buck control logic module; and in the second operating mode, feedback an output voltage of the second end of the power drive circuit to the boost control logic module.

2. The buck/boost chip according to claim 1, further comprising a detection circuit, wherein
in the first operating mode, the detection circuit is connected to the feedback circuit and the first feedback point, and in the second operating mode, the detection circuit is connected to the feedback circuit and the second feedback point; and
the detection circuit is configured to detect, based on the operating mode of the buck/boost chip, whether an output voltage of the buck/boost chip meets a preset working condition, wherein the preset working condition comprises the following: in the first operating mode, the output voltage of the first end of the power drive circuit is less than the input voltage of the second end of the power drive circuit, and in the second operating mode, the output voltage of the second end of the power drive circuit is greater than the input voltage of the first end of the power drive circuit.

3. The buck/boost chip according to claim 2, wherein the power drive circuit comprises a first capacitor, a second capacitor, a first field effect transistor, a second field effect transistor, and an inductor, wherein: a second end of the buck/boost chip is connected to the first capacitor in parallel; a first end of the first capacitor is connected to a first end of the first field effect transistor; a second end of the first capacitor is connected to a first end of the second field effect transistor and a second end of the second capacitor; a third terminal of the first field effect transistor is connected to a third terminal of the second field effect transistor and a first end of the inductor; a second end of the first field effect transistor is connected to a first end of the buck control logic module, a first end of the boost control logic module, and a second end of the feedback circuit; a second end of the second field effect transistor is connected to a second end of the buck control logic module, a second end of the boost control logic module, and a third terminal of the feedback circuit; the detection circuit is connected to the first end of the feedback circuit; a second end of the inductor is connected to a first end of the second capacitor; and the second capacitor is connected to the second end of the buck/boost chip in parallel.

4. The buck/boost chip according to claim 3, wherein
in the first operating mode, the first end of the feedback circuit is connected to the second end of the inductor and the first end of the second capacitor; and
in the second operating mode, the first end of the feedback circuit is connected to the first end of the first capacitor and the first end of the first field effect transistor.

5. An electronic device, wherein the electronic device comprises the buck/boost chip according to any one of claims 1 to 4.

6. A buck/boost chip control method, comprising:
obtaining operating mode configuration information, wherein the operating mode configuration information is used to instruct a feedback circuit to adjust an operating mode of a buck/boost chip, and the buck/boost chip comprises a boost control logic module, a buck control logic module, the feedback circuit, and a power drive circuit; and
setting the operating mode of the buck/boost chip to an operating mode corresponding to the operating mode configuration information by adjusting a connection relationship of a feedback pin of the feedback circuit based on the operating mode configuration information, wherein the operating mode of the buck/boost chip comprises a first operating mode and a second operating mode; in the first operating mode, a first end of the feedback circuit is connected to a first end of the power drive circuit, the first end of the power drive circuit is a first feedback point of the feedback circuit, the buck control logic module is configured to control the power drive circuit to: reduce an input voltage of a second end of the power drive circuit to a first preset voltage and then output the first preset voltage from the first end of the power drive circuit, and the feedback circuit is configured to feedback the output voltage of the first end of the power drive circuit to the buck control logic module; and in the second operating mode, the first end of the feedback circuit is connected to the second end of the power drive circuit, the second end of the power drive circuit is a second feedback point of the feedback circuit, the boost control logic module is configured to control the power drive circuit to: increase an input voltage of the first end of the power drive circuit to a second preset voltage and then output the second preset voltage from the second end of the power drive circuit, and the feedback circuit is configured to feedback the output voltage of the second end of the power drive circuit to the boost control logic module.

7. The method according to claim 6, after the setting the operating mode of the buck/boost chip to an operating mode corresponding to the operating mode configuration information by adjusting a connection relationship of a feedback pin of the feedback circuit based on the operating mode configuration information, further comprising:
detecting, based on the operating mode of the buck/boost chip, whether an output voltage of the buck/boost chip meets a preset working condition, wherein the preset working condition comprises the following: in the first operating mode, the output voltage of the first end of the power drive circuit is less than the input voltage of the second end of the power drive circuit, and in the second operating mode, the output voltage of the second end of the power drive circuit is greater than the input voltage of the first end of the power drive circuit.

8. The method according to claim 7, wherein the power drive circuit comprises a first capacitor, a second capacitor, a first field effect transistor, a second field effect transistor, and an inductor, wherein: a second end of the buck/boost chip is connected to the first capacitor in parallel; a first end of the first capacitor is connected to a first end of the first field effect transistor; a second end of the first capacitor is connected to a first end of the second field effect transistor and a second end of the second capacitor; a third terminal of the first field effect transistor is connected to a third terminal of the second field effect transistor and a first end of the inductor; a second end of the first field effect transistor is connected to a first end of the buck control logic module, a first end of the boost control logic module, and a second end of the feedback circuit; a second end of the second field effect transistor is connected to a second end of the buck control logic module, a second end of the boost control logic module, and a third terminal of the feedback circuit; the detection circuit is connected to the first end of the feedback circuit; a second end of the inductor is connected to a first end of the second capacitor; and the second capacitor is connected to the second end of the buck/boost chip in parallel.

9. The method according to claim 8, wherein
in the first operating mode, the first end of the feedback circuit is connected to the second end of the inductor and the first end of the second capacitor; and
in the second operating mode, the first end of the feedback circuit is connected to the first end of the first capacitor and the first end of the first field effect transistor.

10. The method according to claim 6, after the setting the operating mode of the buck/boost chip to an operating mode corresponding to the operating mode configuration information by adjusting a connection relationship of a feedback pin of the feedback circuit based on the operating mode configuration information, further comprising:
determining whether a real-time output voltage of the buck/boost chip is stable; and
feeding back, by the feedback circuit if the real-time output voltage is unstable, the real-time output voltage to an input terminal of the buck/boost chip, so that the buck/boost chip performs boost or buck processing on an input voltage of the buck/boost chip based on the real-time output voltage.
